**Europäisches Patentamt**

**European Patent Office**

**Office européen des brevets**

(19)

(11) Publication number : **0 488 572 A2**

(12) # EUROPEAN PATENT APPLICATION

(21) Application number : **91310675.3**

(22) Date of filing : **20.11.91**

(51) Int. Cl.⁵ : **H04J 3/06**

(30) Priority : **28.11.90 US 619631**

(43) Date of publication of application :
**03.06.92 Bulletin 92/23**

(84) Designated Contracting States :
**DE FR GB**

(71) Applicant : **AMERICAN TELEPHONE AND TELEGRAPH COMPANY**
**550 Madison Avenue**
**New York, NY 10022 (US)**

(72) Inventor : **Merchant, Shahrukh S.**
**182 Winding Pond Road**
**Londonderry, New Hampshire 03053 (US)**

(74) Representative : **Johnston, Kenneth Graham et al**
**AT&T (UK) LTD. AT&T Intellectual Property Division 5 Mornington Road**
**Woodford Green Essex, IG8 OTU (GB)**

(54) **Phase aligner.**

(57) A method and apparatus for realigning a plurality of signals which have become misaligned due to propagation over differing path lengths. Each of the signals is stored in a temporary storage register until corresponding portions of all of the signals have arrived. The signals are then simultaneously shifted out, thereby realigning them.

EP 0 488 572 A2

## Technical Field

This invention relates to telecommunications systems, and more particularly, to a method and apparatus for realigning a plurality of related signals for further processing of the signals.

## Background of the Invention

The bandwidth of transmission media in communications networks has increased dramatically in recent years. As a result telecommunications equipment connected to the transmission media must be capable of processing data at a rapid rate, in order that such equipment does not represent a bottleneck in the communications system. One common technique for increasing the speed at which modern communications equipment can operate is parallel processing. Parallel processing is a technique whereby an incoming high speed bit stream which must be decoded, for example, is divided into several lower speed bit streams which are decoded simultaneously and then reassembled. The net effect of such an arrangement is a decoding process which is executed at a much faster rate than the rate at which any of the lower speed bit streams is decoded.

While such a solution is acceptable in most systems, it is difficult to implement in networks that operate at the extremely high speeds of many modern day communications networks. The reason for this is that in order to perform parallel processing, after the high speed data stream is divided into a plurality of lower speed data streams, each of the lower speed data streams is sent to a separate processor, which operates on the data.

After each processor operates on its associated data, the lower speed data streams are all sent to a combiner for retransmission onto the communications media. However, since the physical path lengths to and from each processor are different, the bit streams to be combined often arrive at the combiner at different times. In relatively low speed networks, this difference in path length presents no problem, however, in very high speed networks, several bits of one data stream may arrive at the combiner before the first bit of any of the other streams arrive. As a result, it is difficult to maintain the phase relationships among the different bits, and to recombine the data in an acceptable manner. The fact that parallel processing has found widespread use in imaging, signal processing and a variety of other fields has provided even more motivation to solve this problem.

The problem remaining in the prior art is to provide a technique that will allow utilization of parallel processing but will also alleviate the problems caused by different physical path lengths through the equipment connected to the communications network. Moreover, while the discussion thus far has been directed to the parallel processing problem discussed, the more general need in the prior art is to provide a technique to phase align related signals for any purpose.

## Summary of the Invention

These and other problems of the prior art are overcome in accordance with the present invention which relates to a novel phase aligning circuit for equalizing path delay through equipment connected, for example, to a high speed communications network. In accordance with the invention, a portion of each of a plurality of signals is stored until corresponding portions of all of the signals have arrived and been stored. The corresponding portions are then shifted out substantially simultaneously, thereby realigning them.

In one embodiment, data from each incoming data stream is serially shifted into a separate serial-to-parallel register. After m bits are loaded into the register, all m bits are transferred via a parallel load into a temporary storage location, where they remain until the m bits from each of the other data streams are transferred into their associated temporary storage locations via a parallel load. After all of the temporary storage locations receive their respective m bit blocks of data, the data is shifted out serially, thereby realigning all of the data streams in time and compensating for the different physical path lengths traversed by the separate data streams.

## Detailed Description

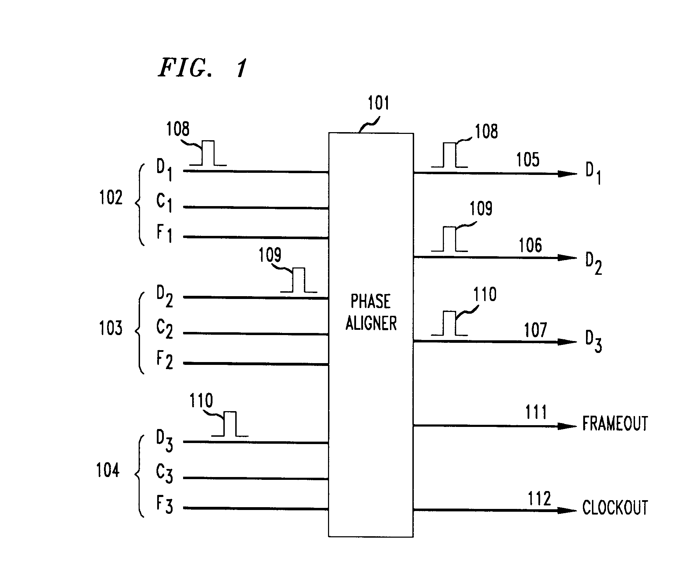

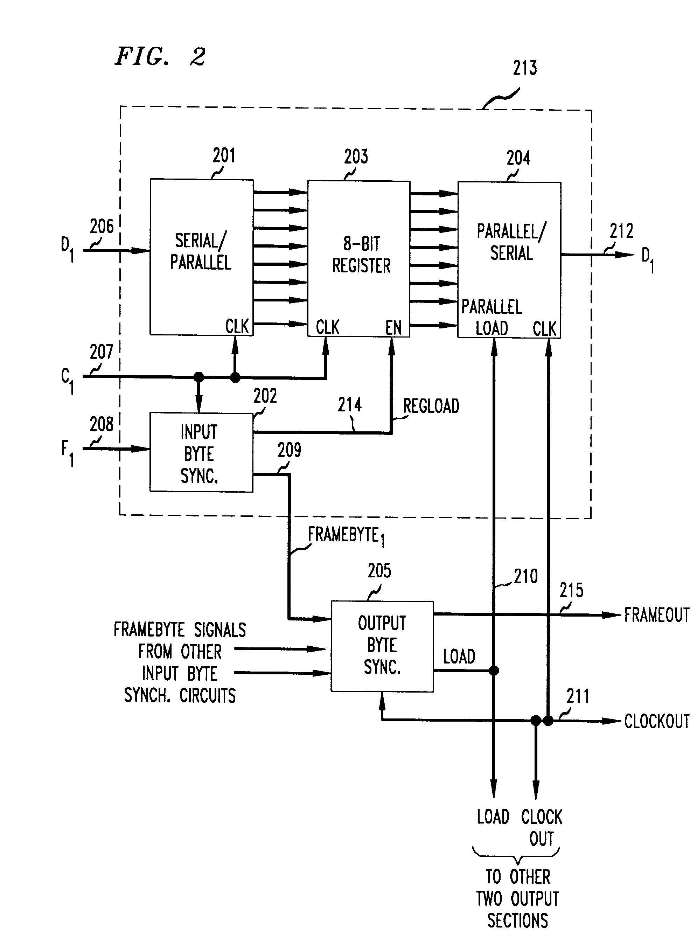

FIG. 1 shows a conceptual block diagram of the invention, indicating pictorially what the device serves to accomplish. Specifically, exemplary bits 108-110 are from corresponding time slots in their respective bit streams, but are shown as being misaligned on the left of the phase aligner. Phase aligner 101 serves to align bits 108-110, and all other bits (not shown) in the arriving data streams. Additionally, each of the arriving bit streams 102-104 includes an associated clock signal and start of frame signal, each depicted in FIG. 1. At the output of the phase aligner, only one clock signal and one start of frame signal is needed because the data signals at outputs 105-107 are all aligned. It should be noted that while three data channels are shown in FIG. 1 and FIG. 2 for purposes of explanation, any number of channels can be handled by the inventive technique.

FIG. 2 shows a block diagram of an exemplary circuit which can be used in accordance with the invention. The arrangement of FIG. 2 includes serial-to-parallel converter 201, parallel-to-serial converter 204, register 203, and input and output byte synchronization circuits 202 and 205, respectively. The arrangement of FIG. 2 utilizes an 8-bit register 203, corresponding to a maximum path length difference of five bits. It should be noted that in general, an m bit register should be utilized to compensate for a maximum path length difference of m-3 bits.

Input and output byte synchronization circuits may be constructed from simple digital logic components which are well known in the art. Those of ordinary skill in the art may readily construct many different embodiments to accomplish the functions of input and output byte synchronization circuits 202 and 205, which are described in detail hereafter and which are considered one of the main novel aspects of applicant's invention. Note that for purposes of clarity, input circuit 213 represents the components required to process only one input data stream, including its associated clock and frame synchronization signals, as described hereafter. In an actual system, the components of circuit 213 would be duplicated to match the number of incoming data streams.

For purposes of explanation, it is assumed hereafter that incoming data streams are organized into frames, wherein each frame includes a plurality of bytes. In operation, incoming data streams arrive at serial-to-parallel converter 201 and other serial-to-parallel converters associated with the other input channels (not shown in FIG. 2). Concurrently therewith a start of frame signal, arrives at input byte synchronization circuit 202. It should be noted that in practice, the start of frame may actually be a part of the incoming data stream itself. Such start of frame bit sequences are well known in the art and may be used to practice this invention.

Input byte synchronization circuit 202 detects start of frame, and begins counting the arriving bits until a full byte has been loaded into serial-to-parallel converter 201. At this point in time, the entire contents of serial-to-parallel converter 201 is loaded in parallel into register 203. This is accomplished by input byte synchronization circuit 202 asserting REGLOAD on output 214, thereby enabling register 203 to parallel load a new byte of data from serial-to-parallel converter 201. Immediately after the detection of start of frame by input byte synchronization circuit 202, a signal FRAMEBYTE$_1$, is generated by input byte synchronization circuit 202 and conveyed to output byte synchronization circuit 205, as shown in FIG. 2. Output byte synchronization circuit 205 is also arranged to receive the signals FRAMEBYTE$_2$ and FRAMEBYTE$_3$, one from each of the other input circuits (not shown). Each of the FRAMEBYTE signals is asserted for one full byte immediately following the start of frame of the associated arriving bit stream. It should be noted again that bytes are used here only because an eight bit register 203 is employed and a five bit maximum path length difference is assumed and that the invention is not limited thereto.

It can be appreciated from the above discussion that as the various frames of data arrive at the input circuits, the various FRAMEBYTE signals will be asserted, and the different registers will become loaded at different times. While each register may become loaded several bits after any other, the amount of time between the loading of the first register and the loading of the last register will be bounded by the maximum difference in the physical path lengths traversed by each of the incoming bit streams. Given that this maximum path length difference is known in advance, those of ordinary skill in the art can readily calculate the maximum amount of difference, in bit times, between any two of the arriving bit streams. The size of register 203 and consequently, of registers 201 and 204, should then be selected to be at least three bits larger so that timing details are accounted for; i.e., if data arrives exactly on the edge of a clock cycle. Furthermore, each FRAMEBYTE signal should, in general, remain asserted for three bits longer than the maximum path delay difference. Moreover, variable delays can be accounted for by providing all registers to be 3 + V + d bits long where V is the maximum variability, in bits, in the path length difference, and d is the maximum path length difference in bits. For example, an eight bit register will suffice for a five bit fixed maximum path length difference or a maximum path length difference of four bits which may vary by one bit in either direction.

After output byte synchronization circuit 205 detects that the first FRAMEBYTE signal has been asserted, it will count 6 additional bit times (or 6-V to account for variability as previously discussed) and verify that all FRAMEBYTE signals are asserted. If the maximum path length difference is five bits, (5-V for variability) then a worst case timing analysis shows that six bits after the first FRAMEBYTE is asserted (or 6-V for variability), all of the FRAMEBYTE signals will be asserted. If this is the case, then LOAD will be asserted on output 210. Output 210, as indicated in FIG. 2, is routed to parallel-to-serial converter 204 as well as to the parallel-to-serial converters associated with other input circuits (not shown). This causes the data from register 203 and each of the corresponding registers associated with the other input circuits to be loaded simultaneously into their respective associated output parallel-to-serial converters. The CLOCKOUT signal on output 211 is then used to serially shift out the data from the plurality of parallel-to-serial converters. Note that the CLOCKOUT signal is routed to all output sections, guaranteeing that all three exemplary signals are shifted out at the same rate.

It should be particularly noted that the embodiment described herein and shown in FIG. 2 utilizes a start of frame detection at the input in order to start counting bits. Once the start of frame is detected, the system is considered locked. Thereafter, the input circuitry can count the incoming bits in order to determine when the next byte is ready for loading into register 203. Thus, the start of each byte of data is determined by its position relative to the start of frame signal. If there are N bytes of data per frame, then after N bytes there will be a new start of frame signal in each incoming data stream. Moreover, after the first byte of data in each frame is loaded into register 204, all remaining bytes will be loaded by simply performing a load every eight bits, since FRAMEBYTE signal can only be generated once per frame and will thus only available for the first byte of each frame.

If the data signals have a maximum path length difference of m-3 bits, where m is the size of each of registers 201, 203 and 204, the FRAMEBYTE signals of all of the incoming data streams should be high simultaneously for at least one bit time in each frame. Consequently, when LOAD is asserted the FRAMEBYTE signals should either all be high for the first byte of the frame, or all be low for any bytes other than the first byte. This condition, the failure of which indicates loss of synchronization, should be monitored by the output byte synchronization circuit. If loss of synchronization is detected, the circuit can once again synchronize in the next frame as previously described. This feature allows the system to remain locked in synchronization and to immediately detect loss of such synchronization, thereby minimizing data loss.

The output clock, CLOCKOUT, may be derived from any of the incoming data clocks, or may be derived from a separate oscillator at the frequency of the incoming data bits. Additionally, a FRAMEOUT signal, which marks the beginning of each frame at the output 215, may be derived from the incoming start of frame messages and the LOAD signal. Specifically, those of ordinary skill will readily recognize that the LOAD signal may be delayed to provide a FRAMEOUT signal analogous to $F_i$, except on the output rather than the input, and only when the corresponding start-of-frame signals are active.

It can be appreciated from the above discussion that the outgoing serial signals will be phase aligned as shown in FIG. 1 on the right hand side of phase aligner 101. The invention allows parallel processing to be used, yet avoids the drawbacks thereof.

While the preferred embodiment has been described herein, it should be noted that the invention is not limited to such an embodiment, and that other variations may be constructed by those of ordinary skill in the art. Many different arrangements of logic circuitry can be used to implement the functions described herein, any number of inputs and outputs may be used, any length of delay and variability in delay may be accomodated, and other variations of the invention may be constructed without departing from the scope thereof.

## Claims

1. Apparatus for aligning a plurality of misaligned signals said apparatus characterised by means (201,203) for storing corresponding portions $(D_1,D_2,D_3)$ of the misaligned signals until such time as a corresponding portion from each of said misaligned signals is received or stored; and

   means (204,205) for shifting out corresponding portions of the signals substantially simultaneously when all of the corresponding portions have been received.

2. Apparatus according to claim 1, characterized in that said means for storing includes means (201,203) for parallel loading each of the corresponding portions of said misaligned signals.

3. Apparatus according to claim 2, further characterized by
   means (202) for detecting a start of frame signal in each arriving signal; and
   means (205) for determining the start of each of said portions by counting bit times from said start of frame signal.

4. Apparatus according to claim 2 or 3, further characterized by an output byte synchronization circuit (205) for determining when corresponding portions of all of said signals have been stored.

5. Apparatus according to claim 4, further characterized by means (205) for counting bit times from a predetermined start of frame signal to determine when corresponding portions of all of said signals have been stored.

6. Apparatus according to claim 4, further characterized by means (213) for accomodating variable path length differences of said signals.

7. A method of processing a plurality of misaligned signals, characterized by steps of:
   storing corresponding portions of the misaligned signals until such time as a corresponding portion from each of said misaligned signals is stored; and simultaneously
   shifting out the corresponding portions of the signals when all of said corresponding portions have been stored.

8. The method of claim 7, further characterized by the steps of:
   detecting a start of frame signal in each misaligned signal; and
   determining the start of each of said portions by counting bit times from said start of frame signal.

9. The method of claim 7, characterized in that the step of storing includes the step of parallel loading each of said corresponding portions of said misaligned signals into a register.

10. A method according to claim 9, further characterised by the step of verifying that a plurality of FRAMEBYTE signals are all simultaneously asserted for a predetermined time period.

# FIG. 1

*FIG. 2*